# EUROPEAN PATENT SPECIFICATION

(11) **EP 3 319 419 B1**
(45) Date of publication and mention of the grant of the patent: **27.01.2021**
(21) Application number: 16770806.4
(22) Date of filing: 04.07.2016
(51) Int. Cl.: A01K 61/00

(54) **SYSTEM FOR VERTICAL ADJUSTMENT OF A FABRIC IN A NET CAGE, AND A NET CAGE WITH SUCH A SYSTEM**
SYSTEM ZUR VERTIKALEN VERSTELLUNG EINES GEWEBES IN EINEM NETZKÄFIG UND EIN NETZKÄFIG MIT SOLCH EINEM SYSTEM
SYSTÈME DE RÉGLAGE VERTICAL DE TISSU DANS UNE CAGE EN FILET, CAGE EN FILET AYANT UN TEL SYSTÈME

(30) Priority: 08.07.2015 NO 20150894
(43) Date of publication of application: 16.05.2018
(73) Proprietor: MARINE BIO SOLUTIONS AS, 7014 Trondheim (NO)
(72) Inventor: WOLLAN, Håvard, 7014 Trondheim (NO); WOLD ØSTERHUS, Stein, 7048 Trondheim (NO)
(74) Representative: Curo AS
(86) International application number: PCT/NO2016/050150
(87) International publication number: WO 2017/007335

(56) References cited:
- WO-A1-2014/189383
- CN-A- 101 326 898
- ES-A1- 2 216 683
- JP-A- H09 103 219
- US-A- 6 062 170

## Description

The present invention is related to a system for vertical adjustment of a fabric delimiting an upper part of a net cage, and a net cage having an upper delimited part.

### Background

Salmon lice Lepeophtheirus salmonis (and sea lice Caligus elongatus) is one of the most serious health problems in Norwegian fish farms. The lice have large effects on health, growth and survival of farmed and wild salmon, and require major resources for treatment/control, and additionally there are environmental consequences. Lice harm the fish both directly and indirectly. Directly by injuring the fish when eating skin and tissue to such an extent that the fish may loose blood and get problems with the salt balance, and indirectly in that the outer damage to the fish may result in infections with bacteria and virus.

High occurrence of salmon lice in an area are considered as a serious threat towards wild stocks of salmonoids, at the same time as delousing agents may be harmful to the environment close to the fish farms.

Today there are different methods to fight salmon lice in aquaculture farms. The most used methods are different chemicals either added to the feed, or added to the water (bath treatment). Bath treatment may be organized in closed treatment spaces or semi open treatment spaces. Further, in addition to the obvious problems related to contamination of the environment surrounding the net cage, it is a problem that the lice become resistant to the chemicals.

An alternative to chemical treatments is to add wrasse in the net cage together with the fish to be farmed. Use of wrasse to remove salmon lice has proven to be very efficient (Deady et al., 1994), but the access to wrasse is limited, and its efficiency depends on the water temperature.

In recent years, it is also used lice skirts of plankton net arranged around the net cage. There are several designs, both with and without pumping to increase the circulation. Since the lice larva are living in the upper water layers, and has a size of about 0,25 mm, the intention is to put up a physical barrier towards the lice larva and prevent them from entering the net cage. This will reduce the number of lice fastening to the farmed fish, and it may be achieved a considerable, but yet variable, reduction of farmed fish in the net cages infected of salmon lice (Naes et al, 2014).

A number of research papers and studies have shown that salmon lice are affected by the salinity of the water (Bricknell et al, 2006; Connors et al, 2008; Sutherland et al, 2012; Haarsaker, 2013). How it is affected, depends among others on the salinity, exposure time and the development stage of the lice. It is, i.a. reported that development and survival of the copepodid and chalimus stadium of salmon lice are reduced at a salinity less than 30 ‰ and that the mortality increases strongly when the salinity is less than 25 ‰, and that grown lice die when the salinity is less than 12 ‰.

The survival of lice also depends on the exposure time at reduced salinity. It is reported 50 % survival at a salinity of 25 ‰ after about 8 hours. More recent tests suggest that grown lice has a mortality of 50 % after 3 hours at 20 ‰ salinity, while at lower salinity one has considerably higher mortality after shorter exposure time. The salinity is of great importance for the survival of lice at all stages, and in addition it is affecting the behaviour of grown lice at a salinity lower than 28 ‰, as the lice try to swim away from the area having low salinity, and has reduced ability to fasten to or hold on to the fish.

In WO 2014/189383 is described a fish cage comprising floating collar, net cage and sinker tube, wherein the sinker tube can be lifted by a number of lines distributed along the circumference of the net cage, wherein the lines runs from the floating collar to the sinker tube, and at wherein at least one device for tightening and pulling the lines is arranged, as an upper end of each line is connected to the device and a lower part is connected to the sinker tube.

In Norwegian patent 333846 it is attempted to remove salmon lice from farmed fish in a net cage, wherein it is used a treatment chamber with fresh water arranged in a net cage in sea water. The invention also comprises a device for production of fresh water from sea water by reverse osmosis. Fish in the net cage are forced into the chamber of fresh water by lifting the bottom of the net cage.

Production of fresh water by reverse osmosis requires a lot of energy and very high pressures (ca 60-80 bar depending on salinity and utilization degree). Reverse osmosis is also vulnerable to fouling and scaling (i.e. formation of deposit layer) and will require pre-treatment and frequent cleaning. Further, large amounts of fresh water need to be produced, which requires a lot of energy, and it is assumed that the amount of energy produced from a wave-powered generator integrated in the net cage (as stated in NO 333846), will be marginal in a relatively protected location in a fjord.

Another and major challenge will maintaining satisfactory water quality and oxygen level in the treatment period, especially since all the fish must be forced into the treatment zone at the same time, and stay there for a relatively long period.

### The invention

A system for vertical adjustment of a fabric delimiting an upper part of a net cage according to the present invention is disclosed in claim 1. Preferable features of the system are disclosed in the dependent claims.

A net cage having an upper delimited part according to the present invention is disclosed in claim 4.

The present invention seeks to solve some problems related to disease during farming of fish, and especially problems related to parasites such as salmon lice, without extensive use of chemical agents, at the same time as the disadvantages of known systems are reduced or avoided.

The present invention is related to a net cage for fish farming, where it is arranged a fabric, preferably a tight fabric, on the inside or outside of the net in the net cage, in such a way that it is arranged an upper part wherein the water in the part is separated from the water on the outside. The height of the fabric is adjusted with a system according to the present invention, as the lower end of the fabric may be lifted and thus reduce the delimited part. The upper part is open downwards toward the net cage in such a way that fish may swim freely in and out of this part, and fish must pass through the delimited part both upon feeding and when the fish must to the surface to fill the swim bladder. This delimited part will in the following be referred to as the "pool".

The present invention is also related to a net cage having such a system, wherein water in the pool has reduced salinity. Such a pool may be used for prophylactic treatment of the fish, and possibly sporadic therapeutic treatment. Preferably, the water has a salinity less than 28 %o, preferably less than 20 %o, and the reduced salinity is preferably achieved by reverse osmosis, nanofiltration, forward osmosis, electrodialysis and/or capacitive deionization.

By "fabric" it is in this context meant a material which is arranged around the circumference of a net cage, and which is used to protect a part of the net cage from the surroundings. The fabric may be arranged on the inside or the outside of the cage depending on the purpose of the fabric. The material must be bendable and sufficiently strong to withstand the stress upon being in seawater for a period. The material may be wowen or non-wowen, tight or meshed, fine-meshed and/or large-meshed. The choice of material in the fabric will depend both on the purpose of the fabric and whether the fabric should be arranged on the outside or inside of the net cage. The choice of material in the fabric will be obvious for a person skilled in the art.

By "tight fabric" it is in this context meant a fabric being waterproof, in the sense that the water on the inside of the fabric is not mixed with the water on the outside of the fabric. Examples of possible materials may be traditional tarpaulin, which for instance is used upon bath treatment of fish in net cages, plastic- or polymer materials, but materials corresponding to Gore-Tex may also be used.

By water having "reduced salinity" as the expression is used in this patent application, it is meant water having less salinity than the water generally surrounding the net cage. This also means that if the net cage is localized in an area having less salinity than regular seawater, for instance brackish water, the water inside the pool shall have a salinity being lower than the brackish water surrounding the net cage at that location.

The invention comprises a system for suspension and vertical adjustment of a fabric surrounding such a pool in a net cage. The system comprises an upper frame ring, a lower frame ring, and stay lines running between the upper and lower frame ring. According to one embodiment, the fabric is fastened to the upper and lower frame ring, and the depth of the fabric, and thereby the depth of the pool, which the fabric delimits, is adjusted by pulling the stay lines in such a way that the lower frame ring is lifted.

The system further comprises one or more rings arranged between the upper and lower frame ring, in the following referred to as lifting rings. In such embodiment, the fabric is fastened to the lifting rings, but may also be fastened to the upper and/or lower frame ring. The lifting rings are fastened to the stay lines in such a way that the rings may slide along the stay lines, and the rings contribute to both maintain the design/shape of the fabric, and to reduce the stress on the fabric upon lifting/lowering.

There are a number of lifting lines running from one or more lifting rings upwards toward upper frame ring, for lifting the lifting ring. The lifting lines run from the lowermost of the lifting rings. The lifting lines are connected to the lifting rings above, preferably in such a way that the rings above are not lifted when it is pulled in a lifting line being fastened to a ring below. In a more preferred embodiment, the lifting rings have a through hole for accommodating lifting lines being fastened to lifting rings below. When a lifting ring is sufficiently lifted, it will push the lifting ring above.

The upper end of the lifting lines is fastened to a convenient place, for example the upper frame ring or the net cage, such as the floating collar. In cases where the upper end of the lifting lines are not fastened to the upper frame ring, it is preferred that the lifting lines are fastened to the upper frame ring in the same way as described for fastening to higher lifting rings. In embodiments having lifting rings it is an advantage that the fabric is fastened to the lifting rings, as the lifting lines then may be used to adjust the vertical height of the fabric and thus the pool which the fabric delimits, in that the lifting ring which the lifting line is fastened to, will be lifted when it is pulled in the lifting line. The upper end of the lifting lines must thus be fastened in such a way that one may pull in the lifting lines, for instance by using a winch. Such fastening may be performed in many ways which will be obvious to a person skilled in the art.

In an alternative embodiment, the upper lifting ring is arranged close to the upper frame ring, and the fabric is not fastened to the upper frame ring, but to the upper lifting ring. In such an embodiment the upper end of the lifting lines may also be fastened to the upper lifting ring, if this is convenient.

The fabric may be fastened to the lifting rings and/or the frame rings point by point, or along the whole circumference, e.g. in that the fabric is designed with one or more cavities for accommodating the rings. The same regards the stay - and lifting lines, the fabric may be fastened to the lines point by point, or be designed with one or more cavities for accommodation of the lines. In an alternative embodiment, the fabric is not fastened to the lines, but to the rings, and the rings are fastened to the lines.

All rings are preferably made of hollow plastic pipes (e.g. polyethylene) possibly in the form of several hollow plastic elements with partition walls being welded together to a complete ring, in such a way that floating rings with tight and separate chambers filled with air, are achieved. One may add weight to the rings when desired, e.g. to get the rings to be at the desired depth in the water. Usually there is an advantage if the rings, and especially the lower frame ring has a dead weight larger than water, and the weight may e.g. be added by a steel wire running through a number of floating elements, or by using other type of ballast. In alternative embodiments, it may be an advantage that the rings and especially lifting rings have a dead weight less than water, and thus contribute to carry the weight of the fabric.

By stay line and lifting line it is, in the present patent application, meant any rope or fibre strap, having sufficient strength and being suitable for the purpose, it may be wowen, twisted or braided. The lines may be of synthetic or natural fibre. In alternative embodiments it may also be used chain and wire, and during the interpretation of the present invention, "line" should also be interpreted to comprise chain and wire.

The lower frame ring is moored to the net cage, and preferably to the bottom and mooring of the net cages. This may be performed in many ways, and depends on whether the lower frame ring should be lifted when the fabric is lifted. If the fabric is not fastened to the lower frame ring, but to the lowest lifting ring, the frame ring shall be in the net cage over a longer period of time, without being vertically adjusted, and may be moored accordingly. If however, the fabric is fastened to the lower frame ring, and the vertical placing of the frame ring should be changed, the mooring must be adjusted accordingly. This may e.g. be performed by mooring the frame ring by means of pulleys and lines being fastened to the bottom of the net cage. When the frame ring should be lifted, the lines are pulled through a number of pulleys and thus the whole mooring must not be unfastened.

By mooring the system to the net cage and/or the mooring of the net cage, further moorings at the farm is avoided, and the forces acting on the system will be transferred to the net cage at the same time, as the system will move together with the net cage.

The upper frame ring is preferably fastened to or at the floating collar of the net cage. In some embodiments the upper frame ring may be above the surface of the water, as it may be advantageous that the fabric protrudes above the water, e.g. to prevent mixing of water in the upper end. In embodiments where the fabric is not fastened to the upper frame ring, but to the upper lifting ring, it is advantageous that the upper lifting ring is arranged close to the upper frame ring.

In an alternative embodiment, the fabric is fastened to all lifting rings, and it is fastened lifting lines to each of the lifting rings. Further, it is an advantage that the lifting lines pass unhindered by or through the lifting rings above the lifting ring wherein a lifting line is fastened. In this way, one achieves a system wherein the fabric may be lifted sequentially by pulling lifting lines being fastened to a lifting ring. If the fabric should be lifted only partly, one may pull in the lifting lines being fastened to the lowest lifting ring until the fabric is sufficiently lifted, and the fabric will be folded in the lower end. Alternatively, one may pull in the lifting lines fastened to the uppermost lifting ring, possibly second uppermost lifting ring depending on the distance for lifting the fabric, and the fabric will thus be folded in the upper end. Which lifting lines to be used for lifting the fabric in the different cases must be considered in each case. It is also possible to pull all the lifting lines at the same time, and thus the tension and stress in the fabric will be distributed evenly.

Between the upper and the lower frame ring it is arranged stay lines. These are designed to carry the weight of the lower frame ring and possibly also the fabric and will thus be held vertical by the weight they are carrying. The stay lines are preferably connected to possible lifting rings in such a way that the lifting rings may be moved vertically while the stay lines are not moved. In this way, the upper and the lower frame ring and the stay lines constitute a frame, wherein the fabric and the lifting rings are fastened in such a way that the lifting rings and the fabric may be moved vertically independent of the frame rings and the stay lines.

With such a system of rings and lines, the forces acting horizontally on the system will be transferred to frame rings and possibly lifting rings, while forces acting vertically on the system will be transferred to stay lines and possibly lifting lines. Forces acting on the system will thus be transferred to rings and lines instead of the fabric, and forces acting on the fabric will thus be substantially reduced. This may be reflected in longer life time of the fabric, possibly that the requirements to the strength of the material of the fabric may be reduced.

A net cage according to the invention, wherein an upper part is delimited by a fabric, offers the fish in the net cage a possibility to swim in and out of the part. In cases where water having reduced salinity is in the area, the fish will swim there deliberately, as a period in water with reduced salinity will be preventive towards i.a. salmon lice and amoebic gill disease (AGD). The volume of the area may be adjusted to the need at any time by adjusting the depth of fabric surrounding the area. The need may vary according to sea temperature, season variations etc., but may also be adjusted according to the amount of toxins in the sea, such as growth of algae, discharge etc.

The water having reduced salinity should preferably be produced from surrounding seawater, and more preferably from water deeper than the pool. In such an embodiment, the fabric delimiting the pool will be a tight fabric, in such a way that the water on the outside of the pool does not get mixed with the water inside the pool. As water having reduced salinity has lower density than sea water, it will not be mixed much in vertical direction without mechanical mixing. In the lower part of the fabric, it will however, always be diffusion and transmission of water which will increase the salinity. Upon high supply of water having reduced salinity, the surplus water will be lead out under the fabric and thus also reduce the transmission of water having higher salinity in the lower part of the pool.

Research suggests that at a salinity lower than 28 ‰ one may achieve desired effect on the salmon lice, but it may be a need for salinity less than 20 ‰ in some contexts. Necessary or desired salinity of the water in the pool will depend both on the amount of supplied water, and the need for replacement of the water in the pool. If fresh water is added to the pool, the need for supply of water to maintain the salinity will probably be too low to maintain satisfying water quality when regarding oxygen and possibly digestion products from fish and feed. In such cases, the pool must be supplied with water from the surroundings, i.e. water with high salinity.

There are several possible methods/processes, which may be used to produce water having reduced salinity. The most relevant methods are shortly described below:
**Supply from shore.** In cases where the net cage is sufficiently close to the shore, fresh water may be supplied directly from the shore.

**Reverse osmosis (RO).** Reverse osmosis (RO) for production of fresh water from sea water is a well known method. By reverse osmosis (RO) water is pressed from a concentrated solution (sea water) to a diluted solution (fresh water) by overcoming the osmotic pressure. The salt ions remain in the concentrated solution and fresh water is produced. The larger share fresh water being produced, the higher pressure must be used because the osmotic pressure increases in relation to increasing salt concentration in the concentrated solution.

**Nanofiltration (NF)** Nanofiltration (NF) works in the same way as RO except that NF-membranes are more open (ca 2 - 20 nm) than RO-membranes. This means that NF is operated at essentially lower pressure (ca 5 - 15 bar) and higher flux. Upon use of NF one may adjust both salinity and need for water replacement as desired, at the same time as the power consumption is acceptable.

**Forward osmosis (FO)** Forward osmosis (FO) may be considered as a combination of osmosis and NF. It is used an osmosis membrane separating sea water and a "draw"-solution being more concentrated than sea water. The difference in osmotic pressure will transport the water molecules through the membrane from the sea water to the "draw"-solution without extra pumping, while the salt ions remain in the sea water. The "draw"-solution contains large molecules, which may be separate from water with an open NF- or UF-membrane and pumping at moderate pressure.

**Electrodialysis ED/EDR** At electrodialysis or electrodialysis reverse, (ED/EDR) it is used two ionic selective membranes (cationic and anionic selective membrane, respectively) together with positive and negative poles for transport of ions. Use of current ensures transport of ions in the direction of the poles.

**Capacitive deionization (CD)** Capacitive deionization (CD) uses electrically charged porous electrodes for absorption of ions and thus desalting of the water. The method is still under development, but it is promising and energy efficient. It only requires pumping at low pressure and minimal of pre-treatment.

In an alternative embodiment, it is used combinations of different desalting methods, in series, parallel or alternating.

It may be a need for or desirable to treat the water after the unit for reducing the salinity, for instance supply of oxygen, hydrogen peroxide or other medicaments. In an alternative embodiment, the unit for production of water having reduced salinity also comprises devices for post-treatment of the water, before it is led to the pool.

By combining water having reduced salinity and medicaments, one may achieve synergetic effects, and reduce the use of medicaments. By using e.g. hydrogen peroxide one may achieve the desired effect by using substantially lower dosage when the treatment is performed in water having reduced salinity.

Further, there may be necessary to treat the water before the salinity is reduced, and the need will depend on the method to be used. The unit for production of water with reduced salinity may therefor also comprise devices for pre-treatment of the inlet water, such as sieving and/or filtration. The pre-treatment unit may also comprise the system and chemicals for cleaning the membrane and control of fouling, eventually included in a system for cleaning in place, CIP.

Depending on the conditions in the sea, such as temperature, salinity, current, occurrence of algae, lice, etc. it may be desirable to vary the depth of the inlet to the device for production of water with reduced salinity. The water inlet is thus arranged in such a way that the depth can be adjusted. This may be performed in many ways, which will be obvious to a person skilled in the art. The flow of water into the pool may be performed in many ways, preferably in such a way that the water is distributed evenly into the pool, both horizontally and possibly vertically.

According to the invention, the fabric, which delimits the pool in the upper part of a net cage, may be lifted and lowered, and if desirable lifted completely, and the fabric and system for vertical adjustment are a permanent part of the net cage. In periods with a lot of lice, the fabric may be lowered and the pool established, possibly enlarged, water having reduced salinity may be added, and the fish may freely swim into the pool. How large/deep the pool should be depends on several conditions, such as the amount of lice in the water surrounding the net cage, the amount of lice on the fish in the net cage, and the fish density in the net cage. If the amount of lice on the fish is so large that it is desirable to treat the fish with medicaments, such as hydrogen peroxide, one may use the pool already established in the net cage, provided that the fabric is sufficiently tight, and adding the medicaments to the pool.

In an alternative embodiment it is used a fabric not being tight, for instance a fine mesh fabric (e.g. having an clearance size of 350 µm) together with the system for vertical adjustment of the fabric. One may then establish a dynamic lice skirt, which may be adjusted to the need at all times, and the fabric may be lowered to the depth necessary to prevent the lice to get into the net cage (but not deeper). Once the lice danger is reduced, the fabric may be lifted to the depth being necessary to protect the net cage, and once there is no danger for lice, the fabric may be lifted completely. In this way, the fabric will not be deeper than necessary for protection, and one avoids thus unnecessary restriction on the flow through and replacement of water. Other clearance sizes of the fabric may also be used if one desires protection towards other organisms, such as e.g. algae or amoeba (to prevent AGD), which will be obvious to a person skilled in the art.

### Example

A preferred embodiment of the invention will in the following be described with reference to Figures. The example is given to illustrate the invention and should not be used to interpret the invention as it is defined in the enclosed claims, limiting.
Figure 1 shows a net cage having a fabric delimiting an upper part in the net cage,
Figure 2 shows a system for suspension and vertical adjustment of the fabric, and
Figure 3 shows an enlarged part of the fabric.

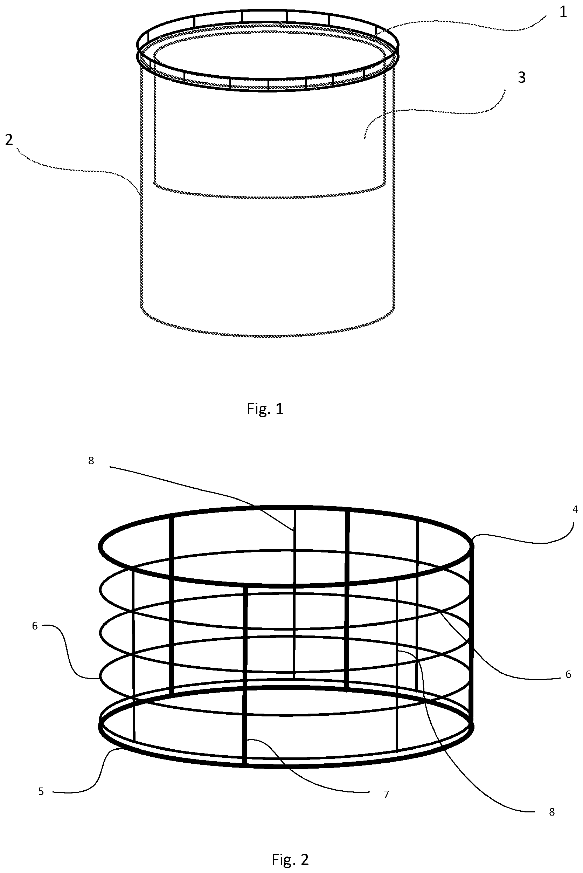

Figure 1 shows a net cage having a traditional construction comprising a floating collar 1 and a net 2. The net is fastened to the floating collar 1 in upper part, and runs down therefrom. In the shown embodiment, it is fastened a fabric 3 on the inside of the upper part of the net 2, as the fabric is open both upwards toward the surface, and downwards toward the net. This fabric 3 delimits an upper part in the net, in the following referred to as a pool. In alternative embodiments, the fabric may be arranged on the outside of the net cage.

In Figure 2 it is shown a system for suspension and vertical adjustment of the fabric according to the invention. The system comprises an upper 4 and a lower frame ring 5, and four lifting rings 6. In order to keep the Figure clear and distinct, the fabric is not shown, but it is fastened to the upper frame ring 4, and to all of the lifting rings 6. The fabric may also be designed in such a way that it comprises the rings.

The upper frame ring 4 should be fastened to the floating collar of the net cage, and the lower frame ring 5 should be moored to the bottom of the net cage. This may be performed in several ways, which will be obvious to a person skilled in the art, and may even vary from fish farm to fish farm.

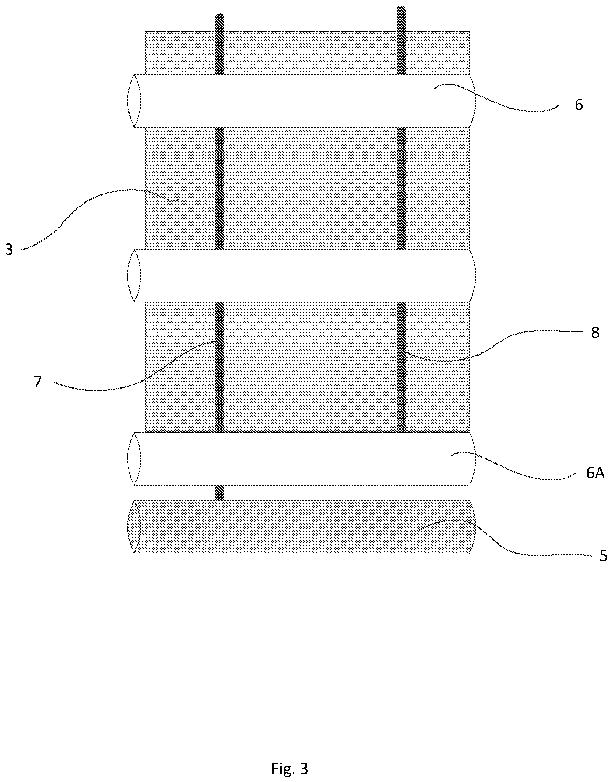

Between the upper 4 and lower 5 frame ring it is fastened stay lines 7, preferably stay ropes as shown in Figure 2 and 3. These ropes are led unhindered through holes in the lifting rings 6 in-between. The stay ropes 7 keeps the lower frame ring 5 at the right place, and are only used when the whole system should be lifted. To the lowermost lifting ring 6A it is fastened lifting lines 8, preferably lifting ropes, protruding upwards toward the upper frame ring. The lifting lines are led unhindered through holes in the lifting rings above, see Figure 3. These are used when the fabric should be lifted, either entirely or just a distance. The upper ends of the lifting lines are not shown, but are conveniently fastened to the frame ring or the net cage.

In a preferred embodiment the lowermost lifting ring 6A is arranged close to the lower frame ring 5, and the fabric 3 is fastened to all of the lifting rings, included the lowermost lifting ring. It is fastened lifting ropes 8 to the lowermost lifting ring 6A, and the lifting ropes are protruding upwards and through holes in the other lifting rings, in such a way that when it is pulled in the lifting ropes the lowermost lifting ring 6A will be pushed upwards while the lower frame ring 5 will not move. The fabric is thus lifted and will be folded first in the lowermost end. In this way, the lower frame ring 5 may be moored at a given depth, independent of the depth of the fabric. The upper end of each lifting rope is preferably fastened to a winch arranged on the net cage (not shown).

In an alternative embodiment, (not shown) different lifting lines are fastened to the different lifting rings, in such a way that it is possible to lift the fabric by pulling the different lifting lines. This will minimize the stress acting on the fabric since it is only lifted in the lifting rings. When the fabric should not be lifted entirely, but just be made shorter, it may alternatively be pulled in the lifting lines being fastened in the lifting ring being closest underneath the surface of the sea, in such a way that the fabric is folded between the lifting ring in question and the upper frame ring. With such an embodiment, the lower part of the fabric will always be stretched.

Further, it is an advantage that it is used winches to lift the fabric. Preferably it is used a number of winches being coordinated in such a way that the fabric is lifted evenly through the whole net cage, possibly it is used one or more central winches wherein more lifting - and/or stay-lines are fastened.

The unit for production of water having reduced salinity is preferably arranged on a floating unit close to the net cage or connected to the fish plant. In a preferred embodiment the water is produced by means of nanofiltration, NF, as it is used a polyamide membrane having a nominal pore opening of about 2 nm, an operation pressure of about 5 bar and a recovery of about 50 %, i.e. a concentrate flow of about 50 %. This is sufficient to produce water having a salinity less than 20‰. The salinity may be adjusted to the need by adjusting the operating conditions and the depth of the water inlet should preferably be adjustable. Further, it is preferred that a post-treatment unit including equipment for adding hydrogen peroxide and oxygenation equipment for extra supply of oxygen when needed, is arranged on the same floating unit. The floating unit may preferably be the same as the float being used for feeding etc.

The water from the floating unit is led to the upper end of the pool in the net cage via a branching-device in order to distribute the water into the pool. The branching-device is not further described.

In a preferred, not shown, embodiment, the nanofiltration plant also comprises a pre-treatment unit comprising a sieve and a unit for fouling control and cleaning (e.g. Cleaning In Place, CIP).

The scope of the invention should not be limited to the example stated above, but the enclosed claims. Modifications and amendments being obvious to a person skilled in the art should also be within the scope of the invention.

## Claims

1. System for vertical adjustment of a fabric (3) delimiting an upper part of a net cage, as the fabric (3) is running along a whole circumference of the net cage, wherein the system comprises:
- an upper (4) and a lower (5) frame ring, and at least one lifting ring (6) therebetween, wherein the fabric (3) is fastened at its upper end to the upper frame ring (4) or a lifting ring (6) arranged close to the upper frame ring (4), and at its lower end to a lowermost lifting ring (6A),
- a number of stay lines (7) running vertically between the upper (4) and the lower (5) frame rings and passing through the at least one lifting ring (6, 6A), and
- a number of lifting lines (8) being fastened to the lowermost lifting ring (6A) and running upwards therefrom, wherein the lifting lines (8) are attached to each of the at least one lifting ring (6) or passing through at least one lifting ring (6) above the lowermost lifting ring (6A), wherein the fabric (3) is lifted by pulling the lifting lines (8).

2. System according to claim 1, **characterized in that** the lower frame ring (5) is moored to the net cage, preferably to the mooring of the net cage.

3. System according to any one of the preceding claims, **characterized in that** the lower frame ring (5) and/or one or more of the lifting rings (6, 6A) has a dead weight larger than water.

4. Net cage comprising a delimited upper part being delimited by a vertical fabric (3) arranged along the whole circumference, wherein the water in the part has reduced salinity, wherein the fabric (3) is adjusted vertically with a system according to claim 1.

## Patentansprüche

1. System für eine vertikale Anpassung eines Stoffes (3), der einen oberen Teil eines Netzkäfigs begrenzt, wenn der Stoff (3) entlang eines ganzen Umfangs des Netzkäfigs verläuft, wobei das System umfasst:
- einen oberen (4) und einen unteren (5) Rahmenring und dazwischen wenigstens einen Hebering (6), wobei der Stoff (3) an seinem oberen Ende an dem oberen Rahmenring (4) oder einem Hebering (6), der nahe dem oberen Rahmenring (4) angeordnet ist, und an seinem unteren Ende an einem untersten Hebering (6A) befestigt ist,
- eine Anzahl von Spannseilen (7), die zwischen den oberen (4) und den unteren (5) Rahmenringen vertikal verlaufen und durch den wenigstens einen Hebering (6, 6A) hindurchführen, und
- eine Anzahl von Hebeseilen (8), die an dem untersten Hebering (6A) befestigt sind und von diesem nach oben verlaufen, wobei die Spannseile (8) an jedem des wenigstens einen Heberings (6) angebracht sind oder durch wenigstens einen Hebering (6) über dem untersten Hebering (6A) hindurchführen, wobei der Stoff (3) durch Ziehen der Spannseile (8) angehoben wird.

2. System nach Anspruch 1, **dadurch gekennzeichnet, dass** der untere Rahmenring (5) an dem Netzkäfig, vorzugsweise an dem Festmacher des Netzkäfigs, festgemacht ist.

3. System nach einem der vorhergehenden Ansprüche, **dadurch gekennzeichnet, dass** der untere Rahmenring (5) und/oder einer oder mehrere der Heberinge (6, 6A) ein Eigengewicht aufweist, das größer als Wasser ist.

4. Netzkäfig, der einen begrenzten oberen Teil umfasst, der durch einen vertikalen Stoff (3) begrenzt ist, der entlang des gesamten Umfangs angeordnet ist, wobei das Wasser in dem Teil einen verminderten Salzgehalt aufweist, wobei der Stoff (3) mit einem System nach Anspruch 1 vertikal angepasst ist.

## Revendications

1. Système d'ajustement vertical d'un tissu (3) délimitant une partie supérieure d'une cage en filet, lorsque le tissu (3) s'étend sur toute la circonférence de la cage en filet, le système comprenant :
- un anneau de cadre supérieur (4) et inférieur (5), et au moins un anneau de levage (6) entre eux, le tissu (3) étant fixé à son extrémité supérieure à l'anneau de cadre supérieur (4) ou à un anneau de levage (6) agencé à proximité de l'anneau de cadre supérieur (4), et à son extrémité inférieure à un anneau de levage le plus inférieur (6A),
- un certain nombre de suspentes (7) s'étendant verticalement entre les anneaux de cadre supérieur (4) et inférieur (5) et passant à travers l'au moins une bague de levage (6, 6A), et
- un certain nombre de lignes de levage (8) étant fixées à l'anneau de levage le plus inférieur (6A) et passant vers le haut à partir de celui-ci, les lignes de levage (8) étant attachées à chacun des au moins un anneau de levage (6) ou passant à travers au moins un anneau de levage (6) au-dessus de l'anneau de levage le plus inférieur (6A), le tissu (3) étant soulevé en tirant les lignes de levage (8).

2. Système selon la revendication 1, **caractérisé en ce que** l'anneau de cadre inférieur (5) est amarré à la cage en filet, de préférence à l'amarrage de la cage en filet.

3. Système selon l'une quelconque des revendications précédentes, **caractérisé en ce que** l'anneau de cadre inférieur (5) et/ou un ou plusieurs des anneaux de levage (6, 6A) a/ont un poids propre supérieur à l'eau.

4. Cage en filet comprenant une partie supérieure délimitée étant délimitée par un tissu vertical (3) agencé sur toute la circonférence, l'eau dans la partie ayant une salinité réduite, le tissu (3) étant ajusté verticalement avec un système selon la revendication 1.
